Europäisches Patentamt

European Patent Office

Office européen des brevets

(11) Veröffentlichungsnummer: **0 371 567 B1**

(19)

## (12) EUROPÄISCHE PATENTSCHRIFT

(45) Veröffentlichungstag der Patentschrift: **01.06.94**

(21) Anmeldenummer: **89203028.9**

(22) Anmeldetag: **29.11.89**

(51) Int. Cl.⁵: **H04B 3/23**

(54) Echokompensator.

(30) Priorität: **01.12.88 DE 3840433**

(43) Veröffentlichungstag der Anmeldung:
**06.06.90 Patentblatt 90/23**

(45) Bekanntmachung des Hinweises auf die
Patenterteilung:
**01.06.94 Patentblatt 94/22**

(84) Benannte Vertragsstaaten:
**DE FR GB IT SE**

(56) Entgegenhaltungen:
**EP-A- 0 053 202**
**EP-A- 0 104 660**
**NL-A- 7 311 057**

**IBM TECHNICAL DISCLOSURE BULLETIN. Bd.
30, Nr. 12, Mai 1988, NEW YORK US Seiten 74
- 75; 'Echo Canceller Initialization without
Test Sequence'**

(73) Patentinhaber: **Philips Patentverwaltung
GmbH
Wendenstrasse 35c
D-20097 Hamburg(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB IT SE**

(72) Erfinder: **Brox, Wolfgang
Am Heckacker 57
D-8501 Kalchreuth(DE)**
Erfinder: **Vary, Peter, Dr.-Ing.
Ebertstrasse 20
D-5120 Herzogenrath 3(DE)**

(74) Vertreter: **Peuckert, Hermann, Dipl.-Ing. et al
Philips Patentverwaltung GmbH,
Wendenstrasse 35c
D-20097 Hamburg (DE)**

**Beschreibung**

Die Erfindung betrifft einen Echokompensator mit einem adaptiven Filter, dessen Adaptionsgeschwindigkeit von einer Kontrolleinheit gesteuert wird, die das zugehörige Steuersignal aus ihren Eingangssignalen bestimmt.

Echokompensatoren mit diesen Merkmalen werden z.B. in Telefonnetzen eingesetzt, um zu verhindern, daß das von einem entfernten Teilnehmer kommende Sprachsignal als Echo zurück an den entfernten Teilnehmer übertragen wird. Das elektrische Signal des entfernten Teilnehmers kann z.B. durch den Lautsprecher einer Sprechanlage des Systemes in ein akustisches Signal umgesetzt werden, gelangt als solches zum Mikrofon der Anlage und dann über die abgehende Leitung an den entfernten Teilnehmer, sofern es nicht durch einen Echokompensator unterdrückt wird. Ein Teil dieser Signalschleife wird Echopfad genannt; es ist derjenige Teil, der auf der Seite eines eingesetzten Echokompensators liegt, die dem nahen Teilnehmer zugewandt ist.

Ähnliche Probleme wie bei der Echokompensation treten auch bei der Geräuschkompensation während des Kopfhörerempfangs bei Hör-Sprech-Garnituren (vgl. hierzu die DE 37 33 132) auf. Daher soll im folgenden die Bedeutung des Wortes "Echokompensator die des Wortes "Geräuschkompensator" umfassen. Die Echokompensation im engeren Sinn bleibt jedoch bevorzugtes Anwendungsgebiet der eingangs genannten Schaltung.

Ein Echokompensator mit den oben angegebenen Merkmalen ist z.B. in der EP 0 053 202 B1 beschrieben. Das Sprachsignal des entfernten Teilnehmers wird einem adaptiven Filter zugeführt, das im Idealfall die gleichen Übertragungseigenschaften wie der Echopfad besitzt. Das Ausgangssignal des adaptiven Filters wird vom Mikrofonsignal, das aus einer Überlagerung des Echos und des Sprachsignales des nahen Teilnehmers besteht, abgezogen, so daß sich am Ausgang des hierfür erforderlichen Subtraktionsgliedes ein echofreies Sendesignal ergibt.

Im allgemeinen bestehen jedoch zwischen den Übertragungseigenschaften des adaptiven Filters und des Echopfades erhebliche Abweichungen, die durch einen Regelungsprozeß ausgeglichen werden. Neben dem Signal des entfernten Teilnehmers wird dem adaptiven Filter nämlich noch das Ausgangssignal des Subtrahiergliedes zugeführt. In Abhängigkeit von diesem Signal werden die Übertragungseigenschaften des Filters mit dem Ziel verändert, die mittlere Leistung des Fehlersignales (Ausgangssignal des Subtraktionsgliedes) zu minimieren (Adaptionsvorgang).

Es ist offensichtlich, daß dieser Regelungsprozeß nur dann zu einem wünschenswerten Ergebnis führen kann, wenn allein der entfernte Teilnehmer spricht. Ist in einer solchen Gesprächssituation das Ausgangssignal des Subtrahiergliedes zu null geregelt, so ist der Idealfall erreicht. Verändert jedoch - während der entfernte Teilnehmer spricht - der nahe Teilnehmer z.B. seine Position zum Mikrofon, so ändert sich damit automatisch die Übertragungseigenschaft des Echopfades, so daß der Adaptionsvorgang in der Regel nie zum Stillstand kommt.

Wie schon angedeutet, gibt es Gesprächssituationen, in denen der Regelungsprozeß zu unerwünschten Ergebnissen führen würde und er deshalb in solchen Situationen unterbrochen werden muß. Insbesondere heißt das, daß die Adaptionsgeschwindigkeit des Filters in derartigen Situationen null sein muß. Eine Situation dieser Art liegt vor, wenn

a) beide Teilnehmer sprechen,
b) nur der nahe Teilnehmer spricht und
c) kein Teilnehmer spricht. Adaptiert werden soll, wenn
d) nur der entfernte Teilnehmer spricht.

In der Situation c) muß die Adaptionsgeschwindigkeit des Filters deshalb zu null gemacht werden, weil anderenfalls die Störgeräusche am Ausgang des Subtraktionsgliedes zu null geregelt werden. Dieser Vorgang würde zu einer Einstellung der Übertragungseigenenschaften des Filters führen, die nichts mehr mit den Übertragungseigenschaften des Echopfades zutun haben. Sinngemäßes gilt für die Situationen a) und b).

Um die Gesprächssituation a) bis d) automatisch zu erkennen, ist in der EP 0 053 202 B1 eine Kontrolleinheit vorgesehen, die in Abhängigkeit von drei Signalen die Adaptionsgeschwindigkeit steuert. Diese drei Signale sind das Signal des entfernten Teilnehmers, das Ausgangssignal des Subtraktionsgliedes (Fehlersignal) und das Mikrofonsignal. Die Signale werden ausgewertet und in eine binäre Variable umgesetzt, deren Wert darüber entscheidet, ob die Übertragungseigenschaften des Filters weiter verändert oder festgehalten werden sollen oder anders formuliert: ob die Adaptionsgeschwindigkeit ihren Höchstwert beibehalten oder zu null gemacht werden soll.

Um Mißverständnisse zu vermeiden, sei bemerkt, daß das Abschalten des Adaptionsvorganges nicht gleichbedeutend mit dem Abschalten bzw. Unwirksamschalten des Filters ist; das adaptive Filter bleibt in allen Situationen a) bis d), in dem gleichen Sinne wirksam, in dem der Echopfad wirksam bleibt.

Die bekannte Steuerung der Adaptionsgeschwindigkeit führt zu unbefriedigenden Ergebnissen, weil sich Fehlentscheidungen in der Praxis kaum vermeiden lassen. Ein fälschliches Abschalten des Adaptionsvorganges wäre dabei weniger störend als ein fälschliches Einschalten. Tritt z.B. in einer Situation a) eine plötzliche, starke Dämpfung im Echopfad ein und ist gleichzeitig der Sprachpegel des nahen Teilnehmers im Mikrofonsignal gering (der nahe Teilnehmer hält z.B. beim Sprechen die Hand vors Mikrofon), so wird die Situation d) vorgetäuscht, da zur Erkennung der Situationen a) bis d) nur feste Schwellen für Signalpegel verwendet werden. Der Adaptionsvorgang wird dann mit voller Adaptionsgeschwindigkeit eingeschaltet und führt wegen der Sprachanteile des nahen Teilnehmers - die in diesem Falle als Störsignalanteile anzusehen sind - zu einer Übertragungscharakteristik des adaptiven Filters, die von der des Echopfades wesentlich verschieden sein kann. Wird nun (zutreffend) die Situation a) erkannt (der nahe Teilnehmer spricht z.B. lauter) so wird der Adaptionsvorgang abgeschaltet, jedoch wirkt das Filter mit schlechter Einstellung seiner Übertragungseigenschaften weiter, was insbesondere heißt, daß das Echo nur unvollständig unterdrückt und die Sprache des nahen Teilnehmers verzerrt wird.

Der Erfindung liegt die Aufgabe zugrunde, einen Echokompensator gemäß dem Oberbegriff des Anspruchs 1 anzugeben, bei dem Verzerrungen und unvollkommene Echounterdrückung, die die oben angegebenen Ursachen haben, reduziert werden.

Diese Aufgabe wird gelöst durch einen Echokompensator mit folgenden kennzeichnenden Merkmalen:

1.1. Die Kontrolleinheit enthält ein Rechenwerk, mit dem für jedes der Eingangssignale ein von der Leistung des jeweiligen Signales abhängiger Mittelwert bestimmt wird,

1.2. Die Kontrolleinheit enthält eine Entscheidungsschaltung, mit der festgestellt wird, ob der Mittelwert des Eingangssignales des adaptiven Filters über oder unter einer Schwelle liegt, und mit deren Ausgangssignal die Adaptionsgeschwindigkeit auf null gesetzt wird,

1.3. Das Rechenwerk der Kontrolleinheit bestimmt aus den Mittelwerten der Signale einen Schwellwert, der ins Verhältnis zum Mittelwert des echokompensierten Signales gesetzt wird und steuert in Abhängigkeit von diesem Verhältnis die Adaptionsgeschwindigkeit, falls sie durch die Entscheidungsschaltung nicht auf null gesetzt worden ist.

Der erfindungsgemäße Echokompensator hat den Vorteil, daß bei einem vermeintlichen Wechsel von einer der Situationen a) bis c) zur Situation d) die Adaptionsgeschwindigkeit gleitend verändert werden kann, so daß große durch Störsignale bedingte Abweichungen der Filtercharakteristik von ihrem Optimum selten oder gar nicht auftreten. Die Störbeeinflussung ist also beim erfindungsgemäßen Echokompensator geringer als bei dem oben angegebenen Stand der Technik, weil der Schwellenwert so gewählt werden kann, daß die Adaptionsgeschwindigkeit verringert wird, wenn die Störung sich erhöht und umgekehrt.

Vorteilhafte Ausgestaltungen der Erfindung sind in den Unteransprüchen angegeben und werden weiter unten näher erläutert.

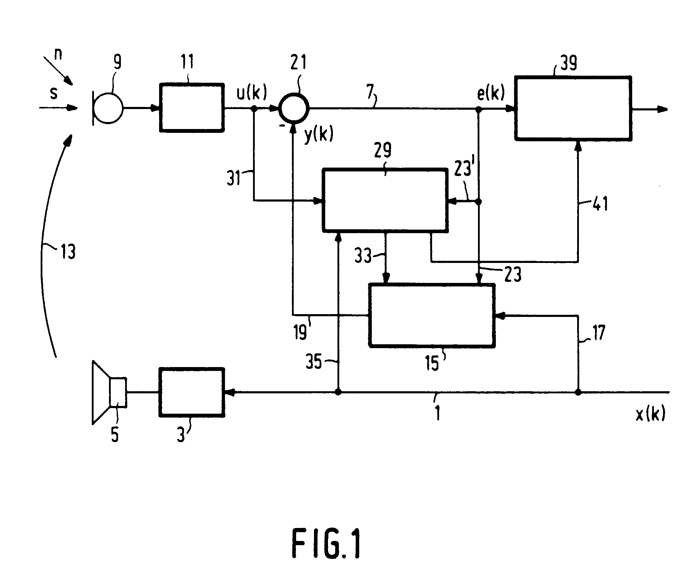

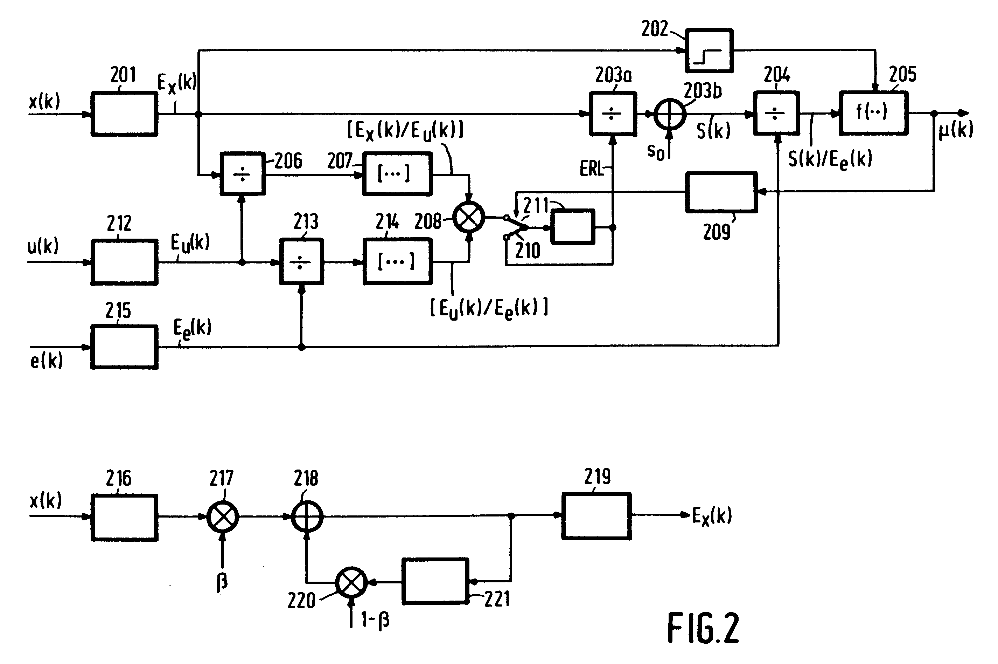

Anhand der Figuren und anhand eines Ausführungsbeispieles soll die Erfindung im einzelnen dargestellt werden. Figur 1 zeigt eine Sprechanlage mit einem Echokompensator, in dem die Erfindung realisiert ist, und Figur 2 zeigt Blockschaltbilder spezieller Funktionseinheiten eines Echokompensators nach Figur 1.

Im Ausführungsbeispiel wird die Echokompensation mit einem digitalen, linearen, nichtrekursiven und adaptiven Filter 15 vorgenommen. Alle Signale, die bei der Echokompensation von Bedeutung sind, liegen daher als digitalisierte Abtastwerte zu äquidistanten Zeitpunkten vor, die durch in Klammern gesetzte Variable für ganze Zahlen, z.B. k symbolisiert sind. Bevor das Signal x(k) des entfernten Teilnehmers auf einer Leitung 1 einem Lautsprecher 5 zugeführt wird, wird es durch einen Digital-Analog-Wandler 3 in ein analoges Signal gewandelt und gelangt als akustisches Signal über einen Echopfad 13 zu einem Mikrofon 9 der Sprechanalage. An das Mikrofon 9 gelangen auch Geräusche n der Umgebung sowie das akustische Signal s des nahen Teilnehmers. Die Überlagerung dieser drei Signale wird durch einen Analog-Digital-Wandler 11 abgetastet, digitalisiert und als Mikrofonsignal u(k) einem Eingang eines Subtraktionsgliedes 21 zugeführt. Im anderen Eingang des Subtraktionsgliedes 21 wird über eine Leitung 19 das Ausgangssignal y(k) des adaptiven Filters 15 zugeführt. Das Subtraktionsglied 21 subtrahiert vom Signal u(k) das Signal y(k). Das Differenzsignal (Fehlersignal) e(k) auf der Ausgangsleitung 7 des Subtraktionsgliedes 21 wird nach dem Durchlaufen eines sogenannten Center-Clippers 39 an den entfernten Teilnehmer übertragen. Gleichzeitig wird es über Leitungsabschnitte 23 und 23′ dem adaptiven Filter 15 und einer Kontrolleinheit 29 zugeleitet. Zusätzlich erhält die Kontrolleinheit über eine Leitung 35 das Signal x(k) und über eine Leitung 31 das Signal u(k). Diese drei Signale werden von der Kontrolleinheit 29 zu zwei Steuersignalen verarbeitet, von denen das erste über eine Leitung 33 zum adaptiven Filter 15 und das zweite über eine Leitung 41 zum Center-Clipper 39 gelangt.

Bei dem linearen, nichtrekursiven Filter 15 sind die Eingangsdaten x(k) mit den Ausgangsdaten y(k) über die Gleichung

$$y(k) = \sum_{i=1}^{N} h_i(k) x(k-i+1) \qquad (1)$$

miteinander verknüpft, wobei die Größen $h_i(k)$ (i = 1, 2, 3...N) die N Filterkoeffizienten zum Abtastzeitpunkt k symbolisieren. Der einfacheren Schreibweise wegen faßt man die N Filterkoeffizienten zu einem N-komponentigen Vektor $\underline{h}(k)$ zusammen und verfährt ebenso mit den Signalwerten x(k), x(k-1)....x(k-N+1). Der entsprechende Vektor ist $\underline{x}(k)$. Die rechte Seite der Gleichung (1) stellt dann das Skalarprodukt der beiden Vektoren zum Zeitpunkt k dar. Für den Zeitpunkt k + 1 wird der Vektor $\underline{h}(k+1)$ nach der Gleichung

$$\underline{h}(k+1) = \underline{h}(k) + \underline{d}(k) \qquad (2)$$

bestimmt. Das zu lösende mathematische Problem besteht darin, die Änderung $\underline{d}(k)$ durch Verwendung von zum Zeitpunkt k bekannter Signalwerte und Filterkoeffizienten derart zu berechnen, daß das Fehlersignal e-(k) im störungsfreien Fall auf der Ausgangsleitung 7 des Subtrahiergliedes 21 tatsächlich nach endlich vielen Änderungsschritten praktisch zu null geregelt wird. Für eine solche Berechnung sind unterschiedliche Algorithmen bekannt (vergleiche hierzu z.B. Ozeki, K. und Umeda, T.: An Adaptive Filtering Algorithm Using an Orthogonal Projection to an Affine Subspace and Its Properties. Elektronics and Communications in Japan, Vol. 67-A, Nr. 5, 1984, pp. 19 - 27).

Die Adaptionsgeschwindigkeit hängt unter anderem von dem verwendeten Algorithmus ab. Die Gleichung (2) bietet nun die Möglichkeit, unabhängig vom verwendeten Algorithmus die Adaptionsgeschwindigkeit zu verkleinern und anschließend wieder zu vergrößern; ihr Höchstwert ist durch den verwendeten Algorithmus vorgegeben. Bei der Steuerung der Adaptionsgeschwindigkeit nach der EP 0 053 202 B1 sind nur zwei Werte möglich, entweder null oder der Höchstwert.

Wird jedoch in Gleichung (2) der errechnete Vektor $\underline{d}(k)$ mit einem Faktor $\mu$ - hier Schrittweitenfaktor genannt - multipliziert, dessen Wert sich kontinuierlich zwischen null und eins ändern kann, so ändert sich auch die Adaptionsgeschwindigkeit entsprechend. Ist $\mu = 1$, hat die Adaptionsgeschwindigkeit ihren durch den Algorithmus vorgegebenen Höchstwert, und ist $\mu = 0$, ist ihr Wert ebenfalls null. Welchen Wert $\mu$ und damit die Adaptionsgeschwindigkeit zum Zeitpunkt k hat, wird vom Wert eines Steuersignales zum Zeitpunkt k festgelegt.

Zur Erzeugung dieses Steuersignales bestimmt die Kontrolleinheit 29 zunächst durch Bausteine 201, 212 und 215 (Fig. 2) aus ihren Eingangssignalen x(k), u(k) und e(k) Kurzzeitmittelwerte $E_x(k)$, $E_u(k)$ und $E_e(k)$, die von der Leistung der Signale abhängen.

Als geeignet haben sich Kurzzeitmittelwerte $E_w(k)$ erwiesen, die Lösung der Gleichung

$$E_w(k) = (1-\beta)^* E_w(k-1) + \beta^* w(k) \qquad (3)$$

sind (vgl. hierzu den unteren Teil der Figur 2 mit Bausteinen 216, 217, 218, 220 und 221), wobei w(k) stellvertretend für das Quadrat oder den Betrag des Abtastwertes eines der oben erwähnten Eingangssignale steht (diese Größe wird durch den Baustein 216 bestimmt) und der Index w erkennen läßt, um welches der drei Signale es sich in einem konkreten Fall handelt. $\beta$ ist ein sogenannter Glättungsparameter, dessen günstigster Wert für Sprachsignale bei 0,05 liegt, wenn diese mit 8 kHz abgetastet werden.

Da die Kurzzeitmittelwerte, die Lösungen von (3) sind, für ihre weitere Verwendung (siehe weiter unten) zeitlich zu sehr schwanken, werden sie (durch einen Baustein 219) nichtlinear geglättet, indem als geglätteter Wert das Maximum der jeweils letzten 128 Lösungen von (3) verwendet wird. Der Einfachheit halber werden im folgenden diese nichtlinear geglätteten Werte und die Lösungen von (3) symbolisch nicht unterschieden.

Mit dem Mittelwert $E_x(k)$ wird zunächst durch einen Schwellwertdetektor 202 (evtl. einer mit Hysterese) entschieden, ob der entfernte Teilnehmer spricht oder nicht. Liegt der Wert von $E_x(k)$ unter einer Schwelle, so wird unterstellt, daß die Gesprächssituation b) oder c) vorliegt. Da für beide Fälle der Adaptionsvorgang ausgeschaltet werden muß, wird sofort - ohne Rücksicht auf die Werte aller anderen Signale - die Adaptionsgeschwindigkeit auf null gesetzt.

Liegt der Wert von $E_x(k)$ über einer Schwelle, so liegt eine der Gesprächssituationen a) oder b) vor. Bei der automatischen Unterscheidung zwischen den Gesprächssituationen a) und b) wird nun nicht nach dem JA-NEIN-Prinzip vorgegangen, sondern es wird gleitend wie folgt operiert zunächst wird ein zeitabhängiger Schwellenwert S(k) nach der Gleichung

$$S(k) = S_o + E_x(k)/ERL \qquad (4)$$

bestimmt (vgl. hierzu Bausteine 203a und 203b), in der $S_o$ eine einmalig bei der Inbetriebnahme des Systems zu bestimmende Konstante bedeutet und ERL ein Schätzwert für den Langzeitmittelwert der totalen Echodämpfung ist, das heißt, ERL ist ein Schätzwert von

$$[E_x(k)/E_e(k)],$$

wobei die eckigen Klammern eine Mittelung über lange Zeiten andeuten.

Der Schrittweite $\mu$ wird sodann der folgende Wert (mit Hilfe der Bausteine 204 und 205) zugeordnet:

$$\mu(k) = f(\, S(k)/E_e(k)\, ) \qquad (5)$$

f ist dabei eine monoton steigende Funktion ihres Argumentes, deren absolutes Maximum eins und deren absolutes Minimum null ist. Als günstig hat sich ein f erwiesen, das zwischen 0 und 1 einen logarithmischen Verlauf hat.

Aus der Definition des Schwellenwertes $S(k)$ ist ersichtlich, daß das Argument der Funktion f größer wird, je kleiner der Mittelwert $E_e(k)$ ist. Beginnt der nahe Teilnehmer zu sprechen, wird der Mittelwert $E_e(k)$ größer und damit $\mu$ kleiner. Folglich kann $\mu$ als Wahrscheinlichkeit dafür interpretiert werden, daß der nahe Teilnehmer nicht spricht. Ist $\mu = 1$, spricht er mit Sicherheit nicht; ist $\mu = 0$, spricht er mit Sicherheit.

Der Schätzwert ERL aus der Gleichung (4) wird zu Beginn eines Gespräches zu eins gewählt (abgelegt in einem Speicher 211). Ist $\mu = 1$, so wird während dieser Zeit der Wert von ERL aktualisiert. Das geschieht derart, daß ein Langzeitmittelwert $ERL_o$ (Echodämpfung des Echopfades) des Quotienten $E_x(k)/E_u(k)$ (vgl. Bausteine 206 und 207) und ein Langzeitmittelwert ERLE (Echodämpfung des adaptiven Filters) des Quotienten $E_u(k)/E_e(k)$ (vgl. Bausteine 213 und 214) gebildet wird und das Produkt (vgl. Baustein 208) dieser beiden Langzeitmittelwerte an die Stelle des alten Wertes für ERL gesetzt wird.

Die Aktualisierung des Wertes von ERL wird immer dann vorgenommen, wenn die genannten Voraussetzungen ($\mu = 1$) erfüllt sind, und zwar mit Hilfe einer Abfrageeinheit 209 und eines Schalters 210 sowie des Speichers 211.

In ganz entsprechender Weise wird der Center-Clipper 39 der Kontrolleinheit 29 gesteuert. Ist $\mu = 1$, werden im Fehlersignal $e(k)$ alle Amplituden unterdrückt, deren Betrag kleiner als ein maximaler Betrag ist. Wird $\mu$ kleiner, wird auch dieser maximale Betrag herabgesetzt. Bei $\mu = 0$ ist der maximale Betrag ebenfalls null.

## Patentansprüche

1. Echokompensator mit einem adaptiven Filter (15), dessen Adaptionsgeschwindigkeit von einer Kontrolleinheit (29) gesteuert wird, die das zugehörige Steuersignal (33) aus ihren Eingangssignalen ($x(k)$), $u(k)$), $e(k)$) bestimmt, von denen eines ($X(k)$) gleichzeitig das Eingangssignal des adaptiven Filters (15) ist und wobei das Ausgangssignal ($y(k)$) des Filters (15) einem Subtraktionsglied (21) zur Erzeugung eines echokompensierten Signals ($e(k)$) zugeführt wird,
gekennzeichnet durch folgende Merkmale:
    1.1. die Kontrolleinheit (29) enthält ein Rechenwerk, mit dem für jedes der Eingangssignale ($x(k)$), $u(k)$), $e(k)$) ein von der Leistung des jeweiligen Signales abhängiger Mittelwert bestimmt wird,
    1.2. die Kontrolleinheit (29) enthält eine Entscheidungsschaltung, mit der festgestellt wird, ob der Mittelwert des Eingangssignales ($x(k)$) des adaptiven Filters über oder unter einer Schwelle liegt, und mit deren Ausgangssignal die Adaptionsgeschwindigkeit auf null gesetzt wird,
    1.3. das Rechenwerk der Kontrolleinheit (29) bestimmt aus den Mittelwerten der Signale einen Schwellenwert, der ins Verhältnis zum Mittelwert des echokompensierten Signales ($e(k)$) gesetzt wird und steuert in Abhängigkeit von diesem Verhältnis die Adaptionsgeschwindigkeit,falls sie durch die Entscheidungsschaltung nicht auf null gesetzt worden ist.

2. Echokompensator nach Anspruch 1,
    dadurch gekennzeichnet,
    daß der Schwellenwert aus der Summe eines zeitlich konstanten Anteiles und des Verhältnisses des Mittelwertes des einem Eingangssignales ($x(k)$) des adaptiven Filters (15) zu einem Schätzwert der totalen Echodämpfung besteht und daß bei Inbetriebnahme der zeitlich konstante Anteil und der Schätzwert durch plausible Werte festgelegt werden.

**3.** Echokompensator nach Anspruch 2,
dadurch gekennzeichnet,
daß in den Zeitintervallen, in denen die Entscheidungsschaltung die Adaptionsgeschwindigkeit nicht auf null gesetzt hat und das Verhältnis von Schwellenwert zu Mittelwert des echokompensierten Signales (e(k)) eine Grenze überschreitet, der Schätzwert für die totale Echodämpfung aktualisiert wird.

**4.** Echokompensator nach Anspruch 3,
dadurch gekennzeichnet,
daß als Schätzwert für die totale Echodämpfung das Produkt zweier Teilechodämpfungen verwendet wird, wobei der erste Faktor aus der Echodämpfung des Echopfades (13) und der zweite Faktor aus der Echodämpfung des adaptiven Filters (15) besteht.

**5.** Echokompensator nach einem der vorhergehenden Ansprüche,
dadurch gekennzeichnet,
daß das echokompensierte Signal (e(k)) einen Center-Clipper (39) durchläuft, bei dem die Größe der zu unterdrückenden Signalamplituden ebenfalls in Abhängigkeit vom Verhältnis des Schwellenwertes zum Mittelwert des echokompensierten Signales (e(k)) gesteuert wird.

## Claims

**1.** Echo canceller comprising an adaptive filter (15), whose adaptation rate is controlled by a control unit (29) which determines the appropriate control signal (33) in response to its input signals (x(k), ,u(k), e-(k)), one (x(k)) of which is at the same time the input signal of the adaptive filter (15) and in which the output signal (y(k)) of the filter (15) is applied to a subtracter means (21) for producing an echo-cancelled signal (e(k)), characterized in that
1.1 The control unit (29) comprises an arithmetic unit which determines for each of the input signals (x(k), u(k), e(k)) a mean value depending on the signal power of each signal;
1.2 The control unit (29) comprises a decision circuit which establishes whether the mean value of the input signal (x(k)) of the adaptive filter is situated above or below a threshold, and with whose output signal the adaptation rate is set to zero;
1.3 The arithmetic unit of the control unit (29) determines from the mean values of the signals, a threshold which bears a proportion to the mean value of the echo-cancelled signal (e(k)) and controls the adaptation rate as a function of this proportion in the ease where this adaptation rate has not been set to zero by the decision circuit.

**2.** Echo canceller as claimed in Claim 1, characterized in that the threshold consists of the sum of a time-constant part and of the ratio of the mean value of the one input signal (x(k)) of the adaptive filter (15) to an estimate of the total echo return loss and in that the time constant part and the estimate are defined by plausible values when the echo canceller is put into operation.

**3.** Echo canceller as claimed in Claim 2, characterized in that in the time intervals in which the decision circuit has not set the adaptation rate to zero and the ratio between the threshold and the mean value of the echo-cancelled signal (e(k)) exceeds a limit, the estimate of the total echo return loss is updated.

**4.** Echo canceller as claimed in Claim 3, characterized in that the product of two partial echo return losses is used for the estimate of the total echo return loss, the first factor consisting of the echo return loss of the echo path (13) and the second factor consisting of the echo return loss of the adaptive filter (15).

**5.** Echo canceller as claimed in one of the preceding Claims, characterized in that the echo-cancelled signal (e(k)) passes through a centre clipper (39), in which the magnitude of the signal amplitudes to be suppressed is also controlled in dependence on the ratio of the threshold to the mean value of the echo-cancelled signal (e(k)).

## Revendications

**1.** Annuleur d'écho à filtre adaptatif (15) dont la vitesse d'adaptation est commandée par une unité de contrôle (29) qui détermine le signal de commande associé (33) à partir de ses signaux d'entrée (x(k), u(k) et e(k)), l'un d'entre eux (x(k)) étant simultanément le signal d'entrée du filtre adaptatif (15) et le signal de sortie (x(k)) du filtre (15) étant acheminé à un circuit de soustraction (21) pour produire un signal à écho compasé (e(k)), caractérisé par les particularités suivantes :

1.1. l'unité de contrôle (29) contient un calculateur à l'aide duquel on détermine, pour chacun des signaux d'entrée (x(k), u(k), e(k)), une valeur moyenne dépendant de la puissance du signal en question;

1.2. l'unité de contrôle (29) contient un circuit de décision qui permet d'établir si la valeur moyenne du signal d'entrée (x(k)) du filtre adaptatif se situe au-dessus ou au-dessous d'un seuil et dont le signal de sortie permet de ramener à zéro la vitesse d'adaptation;

1.3. le calculateur de l'unité de contrôle (29) détermine à partir des valeurs moyennes des signaux une valeur de seuil qui est réglée en proportion à la valeur moyenne du signal à écho annulé (e(k)) et commande, en fonction de ce rapport, la vitesse d'adaptation au cas où eue n'a pas été remise à zéro par le circuit de décision.

2. Annuleur d'écho selon la revendication 1, caractérisé en ce que la valeur de seuil est constituée de la somme d'une fraction constante dans le temps et du rapport de la valeur moyenne du premier signal d'entrée (x(k)) du filtre adaptatif (15) à une valeur estimée de l'affaiblissement total de l'écho et que la fraction constante dans le temps et la valeur d'estimation sont fixées par des valeurs plausibles, lors de la mise en exploitation.

3. Annuleur d'écho selon la revendication 2, caractérisé en ce qu'au cours des intervalles de temps dans lesquels le circuit de décision n'a pas remis à zéro la vitesse d'adaptation et le rapport de la valeur de seuil à la valeur moyenne du signal à écho compensé (e(k)) dépasse une limite, la valeur d'estimation est actualisée pour l'affaiblissement total de l'écho.

4. Annuleur d'écho selon la revendication 3, caractérisé en ce que l'on utilise comme valeur d'estimation pour l'affaiblissement total de l'écho le produit de deux affaiblissements d'écho partiels, le premier facteur étant constitué de l'affaiblissement du chemin d'écho (13) et le deuxième facteur étant constitué de l'affaiblissement d'écho du filtre adaptatif (15).

5. Annuleur d'écho selon l'une quelconque des revendications précédentes, caractérisé en ce que le signal à écho compensé (e(k)) passe par un Center-Clipper (39) dans lequel la grandeur des amplitudes des signaux à supprimer est également commandée en fonction du rapport de la valeur de seuil à la valeur moyenne du signal à écho compensé (e(k)).

FIG.1

FIG.2